# EUROPÄISCHE PATENTSCHRIFT

(11) **EP 1 868 923 B1**
(45) Veröffentlichungstag und Bekanntmachung des Hinweises auf die Patenterteilung: **26.05.2010**
(21) Anmeldenummer: 06742519.9
(22) Anmeldetag: 17.03.2006
(51) Int. Cl.: B65G 11/20

(54) **FÖRDEREINRICHTUNG MIT MINDESTENS EINER RUTSCHE FÜR STÜCKGÜTER UND VERFAHREN ZUM STAPELN VON STÜCKGÜTERN IN EINEM BEHÄLTER**
CONVEYING DEVICE COMPRISING AT LEAST ONE SLIDE FOR PIECE GOODS, AND METHOD FOR STACKING PIECE GOODS IN A CONTAINER
DISPOSITIF DE TRANSPORT COMPRENANT AU MOINS UNE GLISSIERE POUR DES ARTICLES DE DETAIL ET PROCEDE POUR EMPILER DES ARTICLES DE DETAIL DANS UN CONTENEUR

(30) Priorität: 11.04.2005 DE 102005016726
(43) Veröffentlichungstag der Anmeldung: 26.12.2007
(73) Patentinhaber: SIEMENS AKTIENGESELLSCHAFT, 80333 München (DE)
(72) Erfinder: TANZ, Torsten, 78247 Hilzingen (DE); ROSENBAUM, Walter, F-75116 Paris (FR); CAVALLO, Alessandro, I-20044 Bernareggio (MI) (IT); DIBENEDETTO, Daniele, I-20040 Cavenago Di Brianza (MI) (IT); GALLIZIA, Carlo, I-20148 Milano (IT); FABIANO, Giuseppe, I-20052 Monza (MI) (IT)
(86) Internationale Anmeldenummer: PCT/EP2006/002462
(87) Internationale Veröffentlichungsnummer: WO 2006/108486

(56) Entgegenhaltungen:
- FR-A- 2 680 121
- GB-A- 1 489 502
- US-A- 6 050 390

## Beschreibung

Die vorliegende Erfindung betrifft eine Fördereinrichtung mit mindestens einer Rutsche für Stückgüter gemäß dem Oberbegriff des Anspruchs 1 und ein Verfahren zum Stapeln von Stückgütern in einem Behälter gemäß dem Oberbegriff des Anspruchs 17.

### Hintergrund der Erfindung

Die vorliegende Erfindung betrifft das Gebiet der Stückguthandhabung (Material Handling), der Postverarbeitung und insbesondere eine Einrichtung und ein Verfahren zur effizienteren Verarbeitung von kombinierten Poststückströmen, die aus Großbriefen und sperrigen kuvertierten Artikeln und zusätzlich dem vollen Spektrum von Päckchen, Gebinden und Pakten bestehen. Die vorliegende Erfindung zielt auf die Entgegennahme von beliebigen Poststücken, die betriebsbedingt in Behältern wie beispielsweise Wannen, Schalen oder Körben platziert werden, um z.B. anschließende mehrfache Sortiergänge oder Transporte zu erleichtern. Die Erfindung erreicht für ein breites Spektrum an flachen Gegenständen und Poststücken eine stabile Stapelung der Poststücke eines über dem anderen in einem Behälter, wobei deren Vorderkanten innerhalb üblicher Industrietoleranzen untereinander ausgerichtet sind, um ein automatisches Wiedereinspeisen mittels standardisierter industrieller automatischer Zuführeinrichtungen in eine Handhabungseinrichtung zu erleichtern.

Bestehende Verfahren zur Sortierung solcher Poststücke auf Stückgut-Sortiermaschinen wie etwa Kippschalensortern (tilt tray sorter) oder insbesondere Querbandsortern (cross belt sorter) sind beeinträchtigt durch die Tatsache, dass, wenn die Poststücke von dem jeweiligen Träger des Sorters am Ausgang in einen Transportbehälter ausgeworfen werden, diese durch unkontrolliertes Fallen in Unordnung in dem Behälter liegen. Ein solches ungeordnetes Stapeln oder Aufhäufen von Poststücken in Postwannen oder -behältern steht dem Zweck eines automatischen Sortierens entgegen, dessen Wirtschaftlichkeit abhängig ist sowohl von einem reibungslosen mehrstufigen internen Sortieren (mehrfaches Durchlaufen einer Sortieranlage) wie auch von einem kompakten Transportvolumen, d.h. von einer durch geordnetes Stapeln der Poststücke möglichst guten Nutzung der verfügbaren Ladekapazität des jeweiligen Behälters.

### Stand der Technik

Aus der US 6,323,452 B1 ist eine Sortieranlage bekannt, die einen in einer horizontalen Ebene endlos umlaufenden Zug von einzelnen Wagen mit Kippschalen aufweist, auf denen die zu sortierenden Stückgüter (Pakete und Päckchen), die an verschiedenen Stellen mittels entsprechender Zufördereinrichtungen auf die Träger des Kippschalensorters aufgegeben und an ausgewählten Ausgabestellen entsprechend ihrem Sortierziel abgegeben werden. Diese Ausgabestellen bestehen aus Rutschen.

In der DE 43 42 851 C2 sind der Aufbau und die Funktion eines Sortierförderers mit kippbaren Tragschalen näher beschrieben.

Die EP 0 700 844 B1 offenbart ein Sortiersystem mit einem geschlossen horizontal umlaufenden Zug von fahrbaren Trägern, die jeweils als Querbandförderer ausgebildet sind, deren Förderrichtung also quer zur Förderrichtung des umlaufenden Zugs verlaufen. Die Ausgabestellen, an denen die zu sortierenden Stückgüter wahlweise abgegeben werden, sind wiederum in Form einer Rutsche ausgebildet.

Es ist allgemein bekannt, dass am Ende einer solchen Rutsche ein Auffangbehälter aufgestellt werden kann, in dem die abgegebenen Stückgüter aufgefangen und für einen nachfolgenden Verarbeitungsgang z.B. zu einer Sortiermaschine transportiert werden können.

Aus der EP 1 384 693 A1 ist eine Rutsche mit wendelförmiger Transportfläche bekannt, die im Wesentlichen senkrecht zur Transportfläche stehende Seitenwände aufweist.

Die US A 6 050 390 offenbart eine Fördereinrichtung für Stückgüter gemäß dem Oberbegriff des Anspruchs 1 sowie ein Verfahren zum automatischen Ablegen und Stapeln von Stückgütern gemäß dem Oberbegriff des Anspruchs 17.

### Kurze Zusammenfassung der Erfindung

Zur Lösung der Aufgabe, ein möglichst gut geordnetes Ablegen und Stapeln von Stückgütern (insbesondere Poststücken), in einem Behälter zu gewährleisten und zu verbessern, schlägt die Erfindung eine Fördereinrichtung für Stückgüter mit den im Patentanspruch 1 genannten Merkmalen sowie ein Verfahren zum automatischen Ablegen und Stapeln von Stückgütern mit den im unabhängigen Verfahrensanspruch 17 genannten Merkmalen vor. Vorteilhafte Weiterbildungen der erfindungsgemäßen Transportvorrichtung ergeben sich aus den Unteransprüchen. Die Merkmale der Erfindung sind in beliebiger Weise miteinander kombinierbar.

Ein Vorteil der vorliegenden Erfindung ist die Bereitstellung einer Vorrichtung und eines Verfahrens zum effektiveren Handhaben insbesondere von Poststücken und das Erreichen eines Stapelns und kantenmäßigen Ausrichtens (edging) in hoher Qualität von Großbriefen, flachen Artikeln (z.B. Kataloge, Zeitschriften usw.), Sonderpoststücken wie auch von beliebigen anderen Poststückarten, die mittels eines Querbandsorters oder Kippschalensorters sortierbar sind.

Eine schlechte Stapelqualität und ein fehlendes Ausrichten der Kanten würde die Effektivität beim Wiedereinspeisen etwa in einen Flat-Sorter zur Sortierung flacher Poststücke beeinträchtigen und, was noch wesentlicher ist, das Bedienpersonal (sweeping operators) wäre ständig damit beschäftigt, flache Artikel, die einzelne Behälter blockieren, weil sie z.B. schräg an einer Behälterwand oder -kante aufliegen, in den Behälter hineinzudrücken, damit noch weitere Stückgüter darin gestapelt werden können. Die Notwendigkeit einer zeitweiligen Befassung einer Bedienperson (sweeper) mit der Sicherstellung einer guten Nutzung der Behälterkapazität erfordert im Gegenzug einen signifikanten zusätzlichen Einsatz von Personal.

Als eines der wichtigen Kriterien für die Stapelqualität berücksichtigt die vorliegende Erfindung das Ausrichten von Kanten (Edging) der zu sortierenden Gegenstände. Dieses Kantenausrichten bedeutet, dass Poststücke, die wieder in eine Sortieranlage über Transportbehälter eingespeist werden sollen, in einer solchen Art und Weise orientiert sind, das bei Aufgabe auf ein Zuführbett (feader bed) die jeweilige Unterkante (bottom edge) des Poststücks und soweit möglich auch die Vorderkante (leading edge) jeweils geeignet ausgerichtet sind, um leicht von dem Zuführeingang (feader induction) der Sortieranlage aufgenommen werden zu können. Eine schlechte Kantenausrichtung vermindert den Durchsatz der Zuführeinrichtung und kann beispielsweise Doppeleinzüge (double feed) zur Folge haben. Die vorliegende Erfindung sieht nun eine Rutsche für die zu sortierenden Artikel vor, die eine Gestaltung aufweist, die insbesondere sicherstellt, dass die gestapelten flachen Artikel im Behälter auch einen hohen Grad an Kantenausrichtung aufweisen.

Arbeitsablaufstudien haben gezeigt, dass eine Stapelung der Gegenstände mit Kantenausrichtung, selbst wenn diese sich während des Transports des gefüllten Behälters zu einem nachfolgenden Sortiergang in einem gewissen Umfang verschieben, zu einer sehr viel besseren Handhabbarkeit als im Falle von einfach ohne Kantenausrichtung unkontrolliert eingefüllten flachen Poststücken führen.

### Detaillierte Beschreibung der Erfindung

Die Erfindung wird anhand der in den Figuren dargestellten Ausführungsbeispiele nachfolgend näher beschrieben. Die Figuren 1 und 3-7 zeigen jeweils in perspektivischer Ansicht eine erfindungsgemäße Transporteinrichtung, während Figur 1 eine einzelne Rutsche und Figur 3 eine aus drei parallelen Einheiten bestehende Rutsche zeigen. Bei sämtlichen Figuren handelt es sich lediglich um stark vereinfachte schematische Darstellungen. Figur 8 zeigt eine schematische Darstellung des Zusammenwirkens des Sortierförderers mit einem Wandler, der die translatorische Bewegung des Sortierförderers in eine Rotationsbewegung für die Rollen umsetzt.

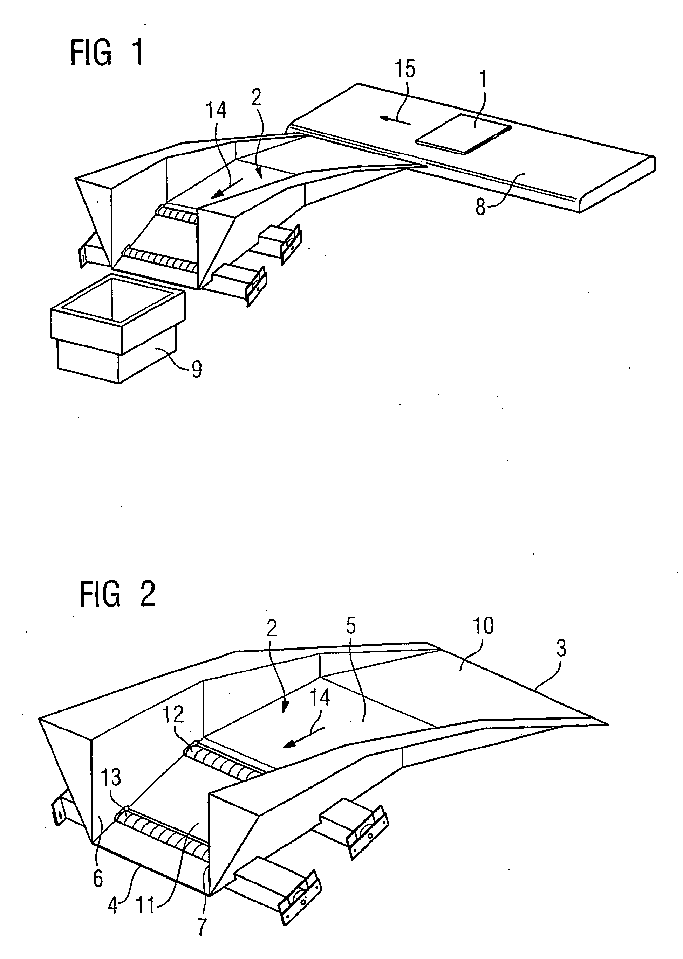

Die in Figur 1 dargestellte erfindungsgemäße Fördereinrichtung für Stückgüter, insbesondere für Poststücke, weist eine Zufördereinrichtung 8 auf, die vorzugsweise als elektronisch steuerbarer Crossbelt-Sorter ausgebildet ist. Die nicht im Einzelnen dargestellten fahrbaren Trägereinheiten dieses Crossbelt-Sorters 8 können sich beispielsweise horizontal in einem geschlossenen Umlauf bewegen (nicht dargestellt). Selbstverständlich kann es sich auch um eine Sortierstrecke mit definiertem Anfang und Ende und/oder um einen Kippschalensorter handeln. Die Fahrtrichtung der Träger des Crossbelt-Sorters ist mit 15 bezeichnet. Auf einem der nicht näher dargestellten Träger liegt ein Stückgut 1, beispielsweise ein Großbrief oder ein in eine Kunststoffhülle eingepackter Katalog oder ein Päckchen. Dieses Stückgut 1 soll von dem Crossbelt-Sorter 8 gezielt über eine Rutsche 2 mit der Förderrichtung 14 in einen Behälter 9 abgegeben werden und in diesem Behälter 9 geordnet und mit den Kanten ausgerichtet auf eventuell bereits darin befindlichen anderen Poststücken (nicht dargestellt) abgelegt werden. Hierbei spielt die Rutsche 2, die in Figur 2 separat dargestellt ist, eine entscheidende Rolle.

Die Rutsche 2 weist eine Eingangsseite 3 und eine unterhalb dieser liegende Ausgangsseite 4 auf, die über eine Förderfläche 5 miteinander verbunden sind. Die Förderfläche 5 besteht aus einem oberen nach unten geneigten Flächenabschnitt 10 und einem unteren Flächenabschnitt 11, der vorzugsweise ebenfalls nach unten geneigt ist. Die Förderfläche 5 ist über ihre gesamte Länge durch Seitenflächen 6, 7, die vorzugsweise im Wesentlichen senkrecht zur Förderfläche 5 stehen, seitlich begrenzt. Diese Seitenflächen 6, 7 haben die Aufgabe, die über die Förderfläche 5 nach unten zur Ausgangsseite 4 rutschenden Stückgüter 1 auf den Behälter 9 hin zu leiten, um sie im Behälter 9 geordnet und ausgerichtet aufnehmen zu können. Um letzteres zu gewährleisten sieht die Erfindung im unteren Flächenabschnitt 11 zumindest einen Aktuator vor, der die Fördergeschwindigkeit des sich auf der Rutsche 2 bewegenden Stückguts 1 unabhängig von der Neigung der Rutsche 2 beeinflussen kann. Die Geschwindigkeit des Stückguts 1 ist nämlich stark abhängig vom Gewicht und den Reibeigenschaften von dessen Oberfläche. Ein relativ schwerer Gegenstand mit sehr geringem Reibkoeffizienten (z.B. mit Polyethylenhülle) gleitet mit sehr viel höherer Geschwindigkeit der Ausgangsseite 4 zu als etwa ein flacher Großbrief von geringem Gewicht mit vergleichsweise rauer Oberfläche. Ein solcher Aktuator kann im Grundsatz beispielsweise auch als wahlweise in die Förderebene der Rutsche 2 geschwindigkeitsabhängig einschwenkbares Bremselement ausgebildet sein, das zu schnelle Stückgüter in geeigneter Weise abbremst. Vorzugsweise ist der Aktuator jedoch als angetriebene, in Förderrichtung umlaufende Rolle 12,13 ausgebildet, die sich von unten durch eine entsprechende Öffnung in der Förderfläche 5 und durch letztere hindurch geringfügig nach oben erstreckt, so dass die geförderten Stückgüter 1 mit einem Teilbereich der Rollenoberfläche in Kontakt treten müssen. Zweckmäßigerweise erstreckt sich diese Rolle 12,13 über die gesamte Breite der Förderfläche 5. Sie hat die Aufgabe, dem jeweils passierenden Stückgut 1 eine definierte Geschwindigkeit in Förderrichtung 14 zu erteilen, also zu schnelle Stückgüter 1 abzubremsen und zu langsame Stückgüter 1 zu beschleunigen. In einer vereinfachten Ausführung der Erfindung könnte die Rolle gegebenenfalls auch ohne einen eigenen Antrieb ausgebildet sein und wäre dann nur in der Lage, als Bremselement zu wirken. Um die Effektivität der Rolle 12,13 bei der Beeinflussung der Geschwindigkeit der Stückgüter 1 zu verbessern, empfiehlt es sich, die Rollenoberfläche ganz oder zumindest in Teilen durch eine entsprechende Beschichtung oder die Herstellung aus einem entsprechenden Material mit einem Reibungskoeffizienten zu versehen, der erheblich größer ist als der Reibungskoeffizient der Förderfläche 5. Besonders vorteilhaft ist es, zumindest zwei Rollen 12,13 in einem Abstand voneinander im unteren Flächenabschnitt anzuordnen, wie dies in allen Figuren der Fall ist. Die Rollen 12,13 der Rutsche 2 werden dabei statt mit gleicher vorzugsweise mit untereinander unterschiedlichen Geschwindigkeiten angetrieben. Als besonders vorteilhaft hat es sich erwiesen, die Geschwindigkeit der oberen Rolle 12 niedriger einzustellen als die der unteren Rolle 13, die näher an der Ausgangsseite 4 liegt. Dadurch kann nämlich gewährleistet werden, dass auch im Falle einer zeitlich sehr dichten Folge der in den Behälter 9 einzufüllenden Stückgüter 1 diese beim Einwerfen in den Behälter 9 einen ausreichenden Abstand voneinander haben, damit eine gegenseitige störende Beeinflussung der Stückgüter 1, die die Ausrichtung der Stückgutkanten und die einwandfreie Stapelung beeinträchtigen könnten, vermieden werden. Als zweckmäßig haben sich Fördergeschwindigkeiten für die obere Rolle 12 im Bereich von 0,3 - 0,7 m/s, insbesondere von 0,5 m/s, und für die untere Rolle im Bereich von 1,0 - 1,5 m/s, insbesondere von etwa 1,2 m/s, erwiesen. Zweckmäßig ist die Förderfläche 5 auch im unteren Flächenabschnitt 11 in Förderrichtung 14 nach unten geneigt. Dabei kann es vorteilhaft sein, die Neigung des unteren Flächenabschnitts 11 stärker auszubilden als diejenige des oberen Flächenabschnitts 10. Zweckmäßigerweise werden im Rahmen der Erfindung im Wesentlichen rechteckig ausgebildete Behälter 9 eingesetzt, wie dies in den Figuren 1 und 4-7 exemplarisch dargestellt ist. Dabei ist es vorteilhaft, einen Behälter 9 jeweils mit einer seiner Längsseiten im Wesentlichen in derselben Ebene ausgerichtet aufzustellen, in der auch eine der Seitenflächen 6 des unteren Flächenbereichs 11 liegt. Bei dieser Seitenfläche 6 handelt es sich um diejenige Seitenfläche, auf die der Pfeil für die Fahrtrichtung 15 des Sortierförderers 8 weist, also gegen die ein von dem Sortierförderer 8 auf die Rutsche 2 abgeworfenes Stückgut 1 aufgrund seiner Massenträgheit prallen wird, wenn die Transportgeschwindigkeit des Sortierförderers nur ausreichend hoch ist. Dadurch wird eine Ausrichtung der in den Behälter 9 hineinfallenden Stückgüter 1 mit einer Längskante an dieser Längsseite des Behälters 9 begünstig. Weiterhin vorteilhaft ist es, für den Behälter 9 eine Halteplattform zur Aufstellung im unmittelbaren Anschluss an den unteren Flächenabschnitt 11 vorzusehen, wobei diese Halteplattform leicht zu derjenigen Seite geneigt ist, wo die Vorderkanten der Stückgüter 1 (in Förderrichtung 14 gesehen) liegen sollen. Beispielsweise aus Figur 1 ist ersichtlich, dass die Rutsche 2, die im Wesentlichen quer zur Fahrtrichtung 15 des Sortierförderers 8 angeordnet ist, mit ihrer Förderfläche 5 und den Seitenflächen 6,7 in dem Sinne leicht bogenförmig verläuft, dass die Förderrichtung 14 der Rutsche 2 im Nahbereich der Eingangsseite 3 eine Komponente in Fahrtrichtung 15 des Sortierförderers 8 aufweist. Da bei leistungsfähigen Sortieranlagen relativ hohe Fördergeschwindigkeiten in Fahrtrichtung 15 vorliegen, wird hierdurch ein Anprall der abgeworfenen Stückgüter 1 an die Seitenfläche 6 abgemildert. Die abgeworfenen Stückgüter 1 können dann an dieser Seitenfläche 6 entlang nach unten in Richtung auf die Ausgangsseite 4 rutschen. Zweckmäßigerweise ist die Förderfläche 5 so gestaltet, dass ihre Breite von der Eingangsseite 3 zur Ausgangsseite 4 hin abnimmt. Auf diese Weise wird eine Trichterwirkung erzielt, die den geordneten Übergang von Stückgütern 1 vom Sortierförderer 8 auch bei hohen Geschwindigkeiten gewährleistet.

Der Einsatz von ein, zwei oder noch mehr angetriebenen Rollen 12,13 am unteren Ende der Rutsche 2 hat noch einen weiteren Vorteil. Wenn nämlich beispielsweise anstelle von üblichen Posttransportbehältern am unteren Ende der Rutsche 2 sehr viel größere Behälter 9 eingesetzt werden, z.B. Rollcontainer oder -körbe, in die die Stückgüter 1 einzuwerfen sind, kann während des Befüllvorgangs durch eine gezielte Veränderung der Fördergeschwindigkeit insbesondere der untersten Rolle 13 die Abwurfparabel der Stückgüter 1 je nach Bedarf geändert werden, um über den Grundriss des Rollcontainers eine möglichst gleichmäßige Verteilung der Stückgüter 1 zu erreichen. Dies ist beispielsweise bei der Sortierung von Paketen und Päckchen besonders wichtig, um das bei einem solchen Rollcontainer zur Verfügung stehende Ladevolumen möglichst weitgehend zu nutzen, ohne das manuelle Eingriffe bei der Befüllung notwendig sind.

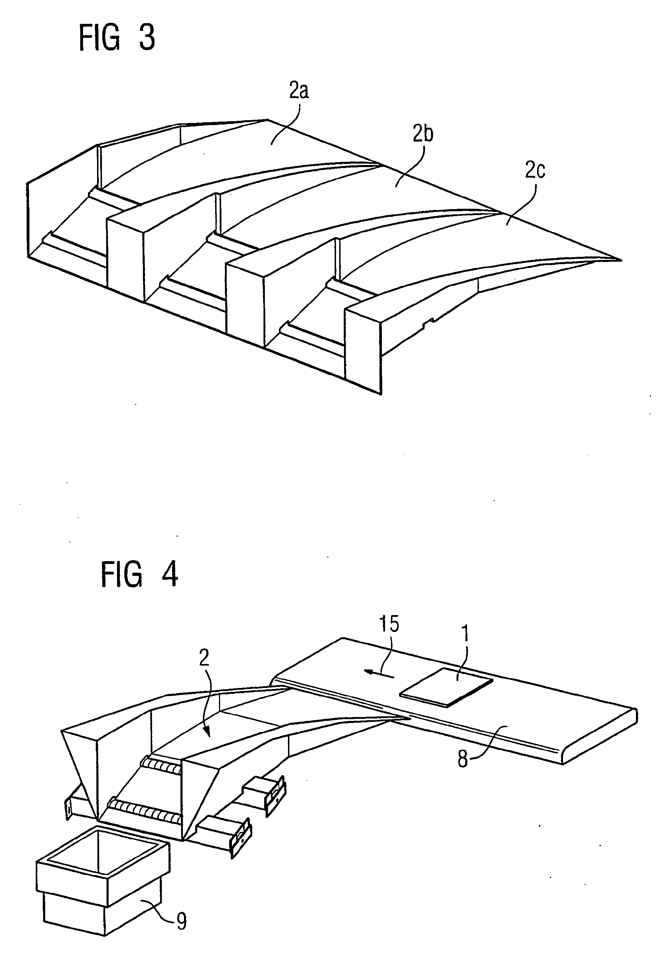

In Figur 3 ist eine Variante der Erfindung dargestellt, bei der eine aus drei parallelen Einheiten 2a, 2b, 2c bestehende Rutsche 2 zum Einsatz kommt. Jede der drei Einheiten 2a - 2c verfügt im unteren Bereich über zwei Rollen, die in Figur 3 nicht direkt dargestellt, sondern nur durch die entsprechenden Öffnungen in der Förderfläche 5 angedeutet sind. In diesem Fall kann es zweckmäßig sein, die angetriebenen Rollen nicht jeweils mit einem separaten Motorantrieb zu versehen, sondern für die gesamte bauliche Einheit der drei Rutschen 2a-2c lediglich zwei Antriebe vorzusehen, also einen gemeinsamen Antrieb für alle unteren Rollen und einen anderen für alle oberen Rollen.

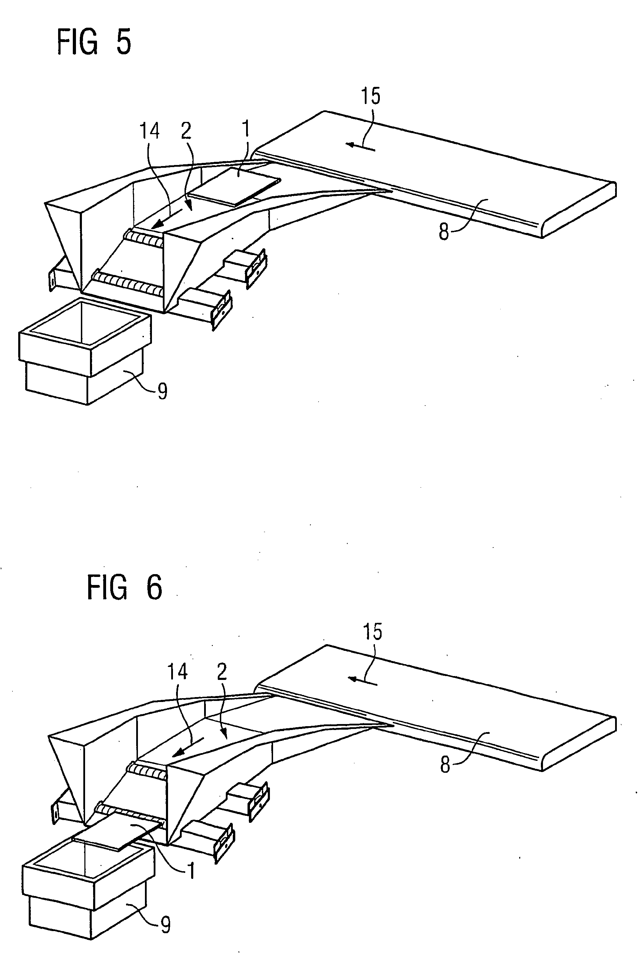

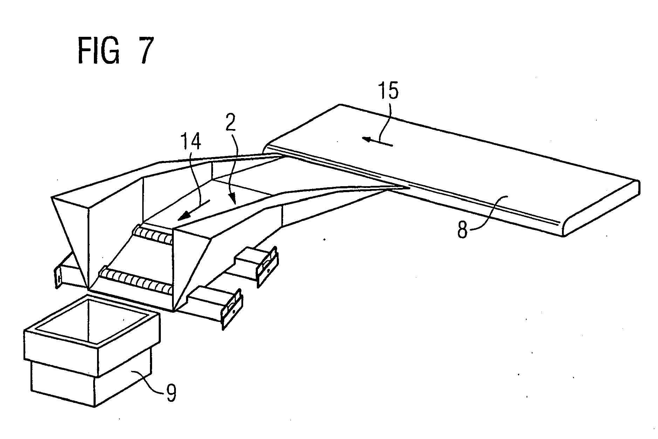

Aus den Figuren 4-7 gehen die verschiedenen Stadien einer Beförderung eines Stückguts 1 vom Sortierförderer 8 in den Behälter 9 im Einzelnen hervor. Figur 4 entspricht dem Zustand aus Figur 1, wo das jeweilige Stückgut 1 noch auf dem beispielsweise als Querband ausgebildeten Träger des Sortierförderers 8 liegt. Sobald das Stückgut 1 in Fahrtrichtung 15 nahe genug an die Eingangsseite 3 der Rutsche 2 angenähert ist, wird das Querförderband des Crossbelt-Sorters 8 betätigt und das Stückgut 1 unter gleichzeitiger Weiterfahrt in Fahrtrichtung 15 quer auf die Rutsche 2 abgeworfen. Dabei prallt es im Regelfall gegen die Seitenfläche 6, wie dies in Figur 5 dargestellt ist. Durch das Gefälle der Förderfläche 5 rutscht das Stückgut 1 entlang der Seitenfläche 6 nach unten und wird durch die obere Förderrolle 12 im Falle einer zu hohen Rutschgeschwindigkeit auf die definierte Fördergeschwindigkeit dieser Rolle 12 abgebremst. Ohne Unterbrechung wird das Stückgut 1 dann auf die untere Rolle 13 gefördert, die mit höherer Geschwindigkeit umläuft und dem Stückgut 1 diese höhere Geschwindigkeit erteilt, so dass es, wie Figur 6 zeigt, mit definierter Geschwindigkeit und ausgerichteten Seitenkanten in den Behälter 9 eingeworfen wird. Figur 7 zeigt das Ende dieses Einzelvorgangs, bei dem das (nicht mehr sichtbare) Stückgut 1 ausgerichtet und mit seiner Vorderkante an der Vorderseite des Behälters 9 anliegend auf dem Boden des Behälters 9 liegt. Weitere Stückgüter 1 können dann in gleicher Weise in den Behälter 9 eingeworfen werden und bilden einen geordneten ausgerichteten Stapel von Gegenständen, die sich für einen anschließenden weiteren Sortiervorgang leicht in eine entsprechende Sortieranlage einführen lassen.

Durch die erfindungsgemäße Anlage und das erfindungsgemäße Verfahren lassen sich insbesondere flache Poststücke sehr vorteilhaft handhaben. Durch die vorzugsweise Verwendung von Crossbelt-Sortern ist es möglich, den Abwurf der Stückgüter von dem Sortierförderer elektronisch in einer optimalen Weise zu steuern, so dass diese Poststücke der Gravitationskraft folgend von dem Querbandförderer durch den oberen Teil der Rutsche, wo die Seitenwände als Führungen arbeiten und dabei die Geschwindigkeitskomponente quer zur Förderrichtung der Rutsche beim Abwurf absorbieren, gleichsam kanalisiert in den unteren Teil der Rutsche befördert werden. Durch die an ihrer Oberfläche einen hohen Reibkoeffizienten aufweisenden Rollen im unteren Teil der Rutsche wird die Abwurfgeschwindigkeit gezielt beeinflusst. Dabei kommt der oberen Rolle im Allgemeinen die Aufgabe zu, die anfängliche Geschwindigkeit des jeweiligen Stückguts zu vermindern, damit die daran anschließende untere Rolle dem Stückgut die für den Abwurf in den Behälter erforderliche definierte Geschwindigkeit bei Wahrung eines ausreichenden Abstands zwischen aufeinander folgenden Stückgütern erteilen kann. Es kommt nämlich bei der Postsortierung häufig vor, dass ein Postsortierer die Poststücke in der Weise vorsortiert, dass eine erhebliche Zahl von z.B. Großbriefen oder anderen flachen Poststücken an denselben Ausgang der Fördereinrichtung gehen müssen, wobei die einzelnen Poststücke dann zeitlich unmittelbar hintereinander auf dieselbe Rutsche gelangen. Das erfindungsgemäße Design der Rutsche sorgt dann dafür, dass beim Einfüllen in den Behälter ausreichende Abstände zwischen den unmittelbar aufeinander folgenden Poststücken gewährleistet werden. Die Abstände der Rollen untereinander und vom Ende der Rutsche sind so gewählt, dass die Abwurfgeschwindigkeit in der gewünschten Weise optimal beeinflusst werden kann. Durch den Antrieb der voneinander beabstandeten Rollen mit unterschiedlichen Fördergeschwindigkeiten wird eine etwa notwendige Drehung der beförderten Stückgüter, die für eine korrekte Ausrichtung ihrer Kanten in Bezug auf den jeweiligen Behälter, in den sie zu entladen sind, begünstigt. Die erfindungsgemäßen befüllbaren Behälter können groß oder klein und von beliebiger Art sein, beispielsweise Körbe, Wannen, Schalen, Kisten oder Rollbehälter.

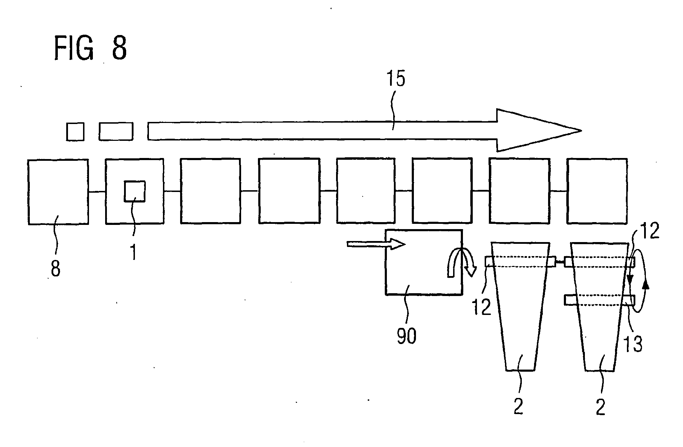

Figur 8 zeigt in schematischer Darstellung, wie ein Wandler 90 die translatorische Bewegung des Sortierförderers 8 in Fahrtrichtung 15 zu einem Anteil abgreift und in eine Rotationsbewegung umsetzt, wobei die Rotationsbewegung auf Rollen 12,13 von Rutschen 2 übertragen wird. Auf diese Weise sind keine gesonderten Antriebe für die Rollen 12,13 erforderlich und auch eine separate Ansteuerung ist nicht zwingend. Der Wandler 90 kann angetrieben von dem Sortierförderer 8 die Rollen 12,13 mehrerer Rutschen 2 antreiben, wobei diese kinematisch aneinander gekoppelt sind.

## Patentansprüche

1. Fördereinrichtung für Stückgüter (1), insbesondere für Poststücke wie Großbriefe, Flachsendungen, Päckchen und Pakete, mit mindestens einer Rutsche (2), die eine Eingangsseite (3) und eine unterhalb dieser liegende Ausgangsseite (4) sowie eine Förderfläche (5) und diese begrenzende Seitenflächen (6,7) zur Führung der Stückgüter (1) aufweist, wobei die Förderfläche (5) aus einem in Förderrichtung (14) der Rutsche (2) nach unten geneigten oberen Flächenabschnitt (10) und einem unteren Flächenabschnitt (11) gebildet ist,
und mit einer an der Eingangseite (3) angeordneten Zuführeinrichtung (8) sowie einer Aufnahmeeinrichtung, insbesondere in Form jeweils eines auswechselbaren Behälters (9), im Anschluss an die Ausgangsseite (4),
**dadurch gekennzeichnet, dass** mindestens zwei quer zur Förderrichtung der Rutsche verlaufende, in Förderrichtung angetriebene Rollen (12,13) im Abstand voneinander im unteren Flächenabschnitt (11) angeordnet sind, die von unten durch entsprechende Öffnungen in der Förderfläche nach oben aus der Förderfläche herausragen und dass die Rollen (12,13) mit untereinander unterschiedlichen Geschwindigkeiten angetrieben werden, wobei die Geschwindigkeit einer Rolle (12) umso höher gegenüber einer anderen Rolle (13) gewählt ist, je näher die jeweilige Rolle (12) der Ausgangsseite (4) liegt.

2. Fördereinrichtung nach Anspruch 1,
**dadurch gekennzeichnet, dass**
die Rollen (12,13) zumindest in Teilbereichen mit einer einen im Vergleich zur Förderfläche (5) wesentlich höheren Reibungskoeffizienten aufweisenden Oberfläche versehen sind, die mit den geförderten Stückgütern (1) in Kontakt bringbar ist.

3. Fördereinrichtung nach Anspruch 1,
**dadurch gekennzeichnet, dass**
zwei Rollen (12,13) vorgesehen sind, von denen die weiter von der Ausgangsseite (4) entfernte Rolle (12) eine Fördergeschwindigkeit im Bereich von 0,3 - 0,7 m/s, insbesondere von 0,5 m/s aufweist und die andere Rolle (13) eine Fördergeschwindigkeit im Bereich von 1 - 1,5 m/s, insbesondere von 1,2 m/s aufweist.

4. Fördereinrichtung nach einem der Ansprüche 1 - 3,
**dadurch gekennzeichnet, dass**
die Förderfläche (5) auch im unteren Flächenabschnitt (11) in Förderrichtung (14) nach unten geneigt ist.

5. Fördereinrichtung nach Anspruch 4,
**dadurch gekennzeichnet, dass**
die Neigung des unteren Flächenabschnitts (11) stärker ist als die Neigung des oberen Flächenabschnitts (10).

6. Fördereinrichtung nach einem der Ansprüche 1 - 5,
**dadurch gekennzeichnet, dass**
die Seitenflächen (6,7) im wesentlichen senkrecht zur Förderfläche (5) stehen.

7. Fördereinrichtung nach einem der Ansprüche 1 - 6,
**dadurch gekennzeichnet, dass**
ein im Grundriss im wesentlichen rechteckiger Behälter (9) jeweils mit einer seiner Längsseiten im wesentlichen in derselben Ebene ausgerichtet aufstellbar ist, in der eine der Seitenflächen (6) des unteren Flächenbereichs (11) liegt.

8. Fördereinrichtung nach einem der Ansprüche 1 - 7,
**dadurch gekennzeichnet, dass**
der jeweilige Behälter (9) im unmittelbaren Anschluss an den unteren Flächenabschnitt (11) auf einer Halteplattform in leicht zu derjenigen Seite geneigter Stellung abstellbar ist, wo die Vorderkanten der Stückgüter (1) liegen sollen.

9. Fördereinrichtung nach einem der Ansprüche 1 - 8,
**dadurch gekennzeichnet, dass**
die Breite der Förderfläche (5) von der Eingangsseite (3) zur Ausgangsseite (4) hin abnimmt.

10. Fördereinrichtung nach einem der Ansprüche 1 - 9,
**dadurch gekennzeichnet, dass**
zwei, drei oder mehr Rutschen (2a,2b,2c) unmittelbar nebeneinander zu einer Gruppe, insbesondere zu einer eine bauliche Einheit bildenden Gruppe, angeordnet sind.

11. Fördereinrichtung nach den Ansprüchen 1 und 10,
**dadurch gekennzeichnet, dass** mehrere sich jeweils entsprechende Rollen (12, 13) einer Gruppe von Rutschen (2a,2b,2c) jeweils einen gemeinsamen Motorantrieb aufweisen.

12. Fördereinrichtung nach einem der Ansprüche 1 - 11,
**dadurch gekennzeichnet, dass**
die Fördergeschwindigkeit der mindestens einen Rolle (12,13), insbesondere der der Ausgangsseite (4) am nächsten liegenden Rolle (13) während des Betriebs gezielt variierbar ist, um dem jeweiligen die Ausgangsseite (4) passierenden Stückgut (1) eine gewünschte Geschwindigkeit zur Beeinflussung seiner späteren Lage im Behälter (9) zu erteilen.

13. Fördereinrichtung nach einem der Anspruch 1,
**dadurch gekennzeichnet, dass**
ein Wandler (90) vorgesehen ist, welcher an die,Förderbewegung der Zufördereinrichtung (8) ankoppelbar ist und mindestens eine Rolle (12,13) einer Rutsche (2) antreibt, wobei der Wandler (90) die Bewegung der Zufördereinrichtung (8) in eine Rotationsbewegung der Rolle (12,13) wandelt.

14. Fördereinrichtung nach Anspruch 13,
**dadurch gekennzeichnet, dass**
der Wandler die Translatorische Förderbewegung der Zufördereinrichtung (8) in eine Rotationsbewegung der Rolle (12,13) wandelt.

15. Fördereinrichtung nach Anspruch 13,
**dadurch gekennzeichnet, dass**
der Wandler (90) mindestens zwei Rollen einer Rutsche (2) antreibt.

16. Fördereinrichtung nach einem der Ansprüche 13 bis 15,
**dadurch gekennzeichnet, dass**
der Wandler (90) Rollen (12,13) mehrerer Rutschen (2) antreibt.

17. Verfahren zum automatischen Ablegen und Stapeln von Stückgütern insbesondere von Poststücken (1) in einem Behälter (9), wobei die Poststücke (1) über eine Rutsche (2) aus einem Material-Handling-System, insbesondere einem Stückgut-Sortiersystem ausgegeben und dem Behälter (9) zugeführt werden, wobei
die Poststücke (1) einzeln in der Weise von dem Material-Handling-System auf die Rutsche (2) aufgegeben werden, **dadurch gekennzeichnet, dass** sie mit einer ihrer Längskanten an einer Seitenwand (6) der Rutsche (2) nach unten rutschen, und
dass im unteren Teil der Rutsche (2) die Transportgeschwindigkeit der Poststücke (1) durch mindestens zwei quer zur Förderrichtung der Rutsche verlaufende, in Förderrichtung angetriebene Rollen (12, 13), die im Abstand voneinander im unteren Flächenabschnitt (11) angeordnet sind, die von unten durch entsprechende Öffnungen in der Förderfläche nach oben aus der Förderfläche herausragen und mit untereinander unterschiedlichen Geschwindigkeiten angetrieben werden, wobei die Geschwindigkeit einer Rolle (12) umso höher gegenüber einer anderen Rolle (13) gewählt ist, je näher die jeweilige Rolle (12) der Ausgangsseite (4) liegt, in der Weise beeinflusst wird, dass das jeweilige Poststück (1) mit einer vorbestimmten Geschwindigkeit in den Behälter (9) fällt, bei der sich die Poststücke (1) an zumindest einer ihrer Kanten, insbesondere an ihrer (in Transportrichtung gesehen) Vorderkante und/oder an einer Längskante, ausgerichtet übereinander im Behälter (9) stapeln.

## Claims

1. Conveying device for piece goods (1), particularly for mail pieces, such as large letters, flat packets, small parcels and packages, comprising at least one slide (2) which has an induction end (3) and a discharge end (4) located below the latter, and also a conveying area (5) and side surfaces (6, 7) which delimit the latter and are intended for guiding the piece goods (1), wherein the conveying area (5) is formed from an upper planar section (10), which is inclined downward in the conveying direction (14) of the slide (2), and a lower planar section (11), and with a feed device (8) arranged at the induction end (3), and a receiving device, particularly in the form in each case of an exchangeable container (9), following the discharge end (4), **characterized in that** at least two rollers (12, 13) which run transversely with respect to the conveying direction of the slide and are driven in the conveying direction are arranged at a distance from each other in the lower planar section (11) and from below protrude through corresponding openings in the conveying area upward out of the conveying area, and **in that** the rollers (12, 13) are driven at different speeds from each other, the closer the one roller (12) lies to the discharge end (4), the greater the speed of said roller (12) is selected to be relative to another roller (13).

2. Conveying device according to Claim 1, **characterized in that** the rollers (12, 13) are provided, at least in subregions, with a surface which has a substantially higher coefficient of friction in comparison to the conveying area (5) and can be brought into contact with the conveyed piece goods (1).

3. Conveying device according to Claim 1, **characterized in that** two rollers (12, 13) are provided, of which the roller (12) further away from the discharge end (4) has a conveying speed in the range of 0.3 - 0.7 m/s, in particular 0.5 m/s, and the other roller (13) has a conveying speed in the range from 1 -1.5 m/s, in particular of 1.2 m/s.

4. Conveying device according to one of Claims 1 - 3, **characterized in that** the conveying area (5) is also inclined downward in the conveying direction (14) in the lower planar section (11).

5. Conveying device according to Claim 4, **characterized in that** the inclination of the lower planar section (11) is greater than the inclination of the upper planar section (10).

6. Conveying device according to one of Claims 1 - 5, **characterized in that** the side surfaces (6, 7) are essentially perpendicular to the conveying area (5).

7. Conveying device according to one of Claims 1 - 6, **characterized in that** a container (9) which is essentially rectangular in top view can be positioned in each case with one of its longitudinal sides oriented essentially in the same plane in which one of the side surfaces (6) of the lower planar region (11) is located.

8. Conveying device according to one of Claims 1 - 7, **characterized in that** the respective container (9) can be deposited directly following the lower planar section (11) on a retaining platform in a position which is slightly inclined to the end at which the leading edges of the piece goods (1) are to be located.

9. Conveying device according to one of Claims 1 - 8, **characterized in that** the width of the conveying area (5) decreases from the induction end (3) to the discharge end (4).

10. Conveying device according to one of Claims 1 - 9, **characterized in that** two, three or more slides (2a, 2b, 2c) are arranged directly next to one another to form a group, in particular to form a group which forms a structural unit.

11. Conveying device according to Claims 1 and 10, **characterized in that** a plurality of respectively corresponding rollers (12, 13) of one group of slides (2a, 2b, 2c) each have a common motor drive.

12. Conveying device according to one of Claims 1 - 11, **characterized in that** the conveying speed of the at least one roller (12, 13), in particular of the roller (13) located closest to the discharge end (4), can be varied in a targeted manner during operation in order to provide the particular piece good (1) passing the discharge end (4) with a desired speed so as to influence its later position in the container (9).

13. Conveying device according to one of Claims 1 - 12, **characterized in that** a converter (90) is provided which can be coupled to the conveying movement of the feed device (8) and drives at least one roller (12, 13) of a slide (2), the converter (90) converting the movement of the feed device (8) into a rotational movement of the roller (12, 13).

14. Conveying device according to Claim 13, **characterized in that** the converter converts the translatory conveying movement of the feed device (8) into a rotational movement of the rollers (12, 13).

15. Conveying device according to Claim 13, **characterized in that** the converter (90) drives at least two rollers of a slide (2).

16. Conveying device according to one of Claims 13 to 15, **characterized in that** the converter (90) drives rollers (12, 13) of a plurality of slides (2).

17. Method for automatically placing and stacking piece goods, in particular mail pieces (1), in a container (9), wherein the mail pieces (1) are discharged from a material-handing system, in particular a piece good sorting system, via a slide (2) and fed to the container (9), wherein the mail pieces (1) are placed individually from the material-handling system onto the slide (2) in such a manner, **characterized in that** they slide downward with one of their longitudinal edges on a side wall (6) of the slide (2), and **in that**, in the lower part of the slide (2), the transporting speed of the mail pieces (1) is influenced by at least two rollers (12, 13), which run transversely with respect to the conveying direction of the slide, are driven in the conveying direction, are arranged at a distance from one another in the lower planar section (11), protrude from below through corresponding openings in the conveying area upwards out of the conveying area and are driven at different speeds from one another with the closer the particular roller (12) lies to the discharge end (4), the greater the speed of said roller (12) being selected to be relative to another roller (13), such that the respective mail piece (1) drops into the container (9) at a predetermined speed, upon which the mail pieces (1) are stacked in the container (9) in a manner such that they are oriented one above another at at least one of their edges, in particular at their leading edge (as seen in the transporting direction) and/or at a longitudinal edge.

## Revendications

1. Dispositif de transport de colis ( 1 ), notamment de colis comme des lettres de grand format, des envois plats, des petits paquets et des paquets, comprenant au moins un toboggan ( 2 ) qui a un côté ( 3 ) d'entrée et un côté ( 4 ) de sortie se trouvant en dessous de celui-ci, ainsi qu'une surface ( 5 ) de transport et des surfaces ( 6, 7 ) latérales la délimitant pour guider les colis ( 1 ), la surface ( 5 ) de transport étant formée d'une partie ( 10 ) de surface supérieure inclinée vers le bas dans le sens ( 14 ) de transport du toboggan ( 2 ) et d'une partie ( 11 ) de surface inférieure, et comprenant un dispositif ( 8 ) d'apport disposé sur le côté ( 3 ) d'entrée ainsi qu'un dispositif de réception, notamment sous la forme respectivement d'un récipient ( 9 ) pouvant être remplacé, à la suite du côté ( 4 ) de la sortie,
**caractérisé en ce qu'**au moins deux rouleaux ( 12, 13 ) s'étendant transversalement à la direction de transport du toboggan et entraînés dans le sens de transport sont disposés à distance l'un de l'autre dans la partie ( 11 ) inférieure de surface, en dépassant vers le haut de la surface de transport par des ouvertures correspondantes par le bas de la surface de transport, et **en ce que** les rouleaux ( 12, 13 ) sont entraînés entre eux à des vitesses différentes, la vitesse d'un rouleau ( 12 ) étant choisie d'autant plus grande par rapport à celle d'un autre rouleau ( 13 ) que le rouleau ( 12 ) respectif est plus proche du côté ( 4 ) de la sortie.

2. Dispositif de transport suivant la revendication 1,
**caractérisé en ce que**
les rouleaux ( 12, 13 ) sont munis au moins dans des zones partielles d'une surface ayant un coefficient de frottement sensiblement plus grand que la surface ( 5 ) de transport et pouvant être mise en contact avec les colis ( 1 ) transportés.

3. Dispositif de transport suivant la revendication 1,
**caractérisé en ce que**
il est prévu deux rouleaux ( 12, 13 ) dont le rouleau ( 12 ) le plus éloigné du côté ( 4 ) de la sortie a une vitesse de transport comprise entre 0,3 et 0,7 m/s, notamment de 0,5 m/s, tandis que l'autre rouleau ( 13 ) a une vitesse de transport comprise entre 1 et 1,5 m/s, notamment de 1,2 m/s.

4. Procédé suivant l'une des revendications 1 à 3, **caractérisé en ce que** la surface ( 5 ) de transport est inclinée vers le bas dans le sens ( 14 ) de transport également dans la partie ( 11 ) inférieure de la surface.

5. Dispositif de transport suivant la revendication 4,
**caractérisé en ce que** l'inclinaison de la partie ( 11 ) inférieure de la surface est plus grande que l'inclinaison de la partie ( 10 ) supérieure de la surface.

6. Dispositif de transport suivant l'une des revendications 1 à 5,
**caractérisé en ce que** les surfaces ( 6, 7 ) latérales sont sensiblement perpendiculaires à la surface ( 5 ) de transport.

7. Dispositif de transport suivant l'une des revendications 1 à 6,
**caractérisé en ce qu'**un récipient ( 9 ) sensiblement rectangulaire en projection horizontale peut être dressé en ayant l'un de ses grands côtés dirigés dans le plan où se trouve l'une des surfaces ( 6 ) latérales de la partie ( 11 ) inférieure de surface.

8. Dispositif de transport suivant l'une des revendications 1 à 7,
**caractérisé en ce que** le récipient ( 9 ) respectif peut être disposé immédiatement à la suite de la partie ( 11 ) inférieure de surface sur une plateforme de maintien en une position légèrement inclinée vers le côté où doivent se trouver les bords avant des colis ( 1 ).

9. Dispositif de transport suivant la revendication 1 à 8,
**caractérisé en ce que** la largeur de la surface ( 5 ) de transport diminue du côté ( 3 ) de l'entrée au côté ( 4 ) de la sortie.

10. Dispositif de transport suivant l'une des revendications 1 à 9, **caractérisé en ce que** deux, trois ou plusieurs toboggans ( 2a, 2b, 2c ) sont disposés directement les uns à côté des autres en formant un groupe, notamment un groupe formant une unité de construction.

11. Dispositif de transport suivant les revendications 1 et 10,
**caractérisé en ce que** plusieurs rouleaux ( 12, 13 ) d'un groupe de toboggan ( 2a, 2b, 2c ) ont respectivement un entraînement par moteur qui est commun.

12. Dispositif de transport suivant l'une des revendications 1 à 11,
**caractérisé en ce que** la vitesse de transport du au moins un rouleau ( 12, 13 ), notamment le rouleau ( 13 ) se trouvant le plus proche du côté ( 4 ) de la sortie, est variable de manière ciblée pendant le fonctionnement pour donner au colis ( 1 ) passant sur le côté ( 4 ) de la sortie une vitesse souhaitée pour influencer son dépôt ultérieur dans le récipient ( 9 ).

13. Dispositif de transport suivant la revendication 1,
**caractérisé en ce qu'**il est prévu un convertisseur ( 90 ) qui peut être couplé au mouvement de transport du dispositif ( 8 ) d'apport et qui entraîne au moins un rouleau ( 12, 13 ) d'un toboggan, le convertisseur ( 90 ) transformant le mouvement du dispositif ( 8 ) d'apport en un mouvement de rotation du rouleau ( 12, 13 ).

14. Dispositif de transport suivant la revendication 13,
**caractérisé en ce que** le convertisseur transforme le mouvement de transport en translation du dispositif ( 8 ) d'apport en un mouvement de rotation du rouleau ( 12, 13 ).

15. Dispositif de transport suivant la revendication 13,
**caractérisé en ce que** le convertisseur ( 90 ) entraîne au moins deux rouleaux d'un toboggan ( 2 ).

16. Dispositif de transport suivant l'une des revendications 13 à 15, **caractérisé en ce que** le convertisseur ( 90 ) entraîne des rouleaux ( 12, 13 ) de plusieurs toboggans ( 2 ).

17. Procédé de dépôt automatique et d'empilement de colis, notamment d'envois ( 1 ) postaux, dans un récipient ( 9 ), l'envoi ( 1 ) postal étant sorti par l'intermédiaire d'un toboggan ( 2 ) d'un système de Material Handling System, notamment d'un système de tri de colis, et envoyé au récipient ( 9 ), dans lequel
on charge les colis ( 1 ) postaux individuellement sur le toboggan ( 2 ) à la façon du système Material Handling System, **caractérisé en ce que**
les envois postaux glissent vers le bas par l'un de leurs grands bords sur une paroi ( 6 ) latérale du toboggan ( 2 ), et
**en ce que** dans la partie inférieure du toboggan ( 2 ) la vitesse de transport des colis ( 1 ) postaux est influencée par au moins deux rouleaux ( 12, 13 ) qui s'étendent transversalement au sens de transport du toboggan, qui sont entraînés dans le sens de transport, qui sont disposés à distance l'un de l'autre dans la partie ( 11 ) inférieure de la surface, qui par le bas par des ouvertures adéquates dans la surface de transport dépassent vers le haut de la surface de transport et qui sont entraînés à des vitesses différentes les uns des autres, la vitesse d'un rouleau ( 12 ) étant choisi d'autant plus grande par rapport à celle d'un autre rouleau ( 13 ) que le rouleau ( 12 ) respectif est plus près du côté ( 4 ) de la sortie de manière à ce que le colis ( 1 ) respectif tombe en ayant une vitesse déterminée à l'avance dans le récipient ( 9 ), dans lequel les colis ( 1 ) postaux s'empilent les uns sur les autres dans le récipient ( 9 ) en étant alignés par au moins l'un de leurs bords, notamment par leur bord avant ( considéré dans le sens de transport ) et/ou par un grand bord.
